# EUROPEAN PATENT APPLICATION

(11) **EP 4 431 780 A1**
(43) Date of publication of application: **18.09.2024**
(21) Application number: 23194479.4
(22) Date of filing: 31.08.2023
(51) Int. Cl.: F16L 33/02, F16L 33/03, F16L 33/08, F16L 33/22, F16L 55/00

(54) **PIPE CONNECTION ASSEMBLY AND INFLATABLE PRODUCT**

(30) Priority: 14.03.2023 CN 202320509835 U
(71) Applicant: Bestway Inflatables & Material Corp., Shanghai 201812 (CN)
(72) Inventor: ZENG, Xianglin, SHANGHAI - NO. 208 JINYUANWU ROAD, 201812 (CN)
(74) Representative: Inchingalo, Simona

(57) **Abstract**

A pipe connection assembly is provided including a first pipe having a first end and a second end; a second pipe including an insertion end extending in a lengthwise direction of the second pipe; and a fixing member. The second pipe includes a first protrusion protruding radially outward from the insertion end, and the insertion end is inserted into the second end of the first pipe such that the first protrusion presses radially outward on the first pipe thereby creating a second protrusion protruding radially outward from a pipe wall of the first pipe. The fixing member is sleeved around an outer periphery of the first pipe and is disposed in the lengthwise direction between the second protrusion and the second end of the first pipe.

## Description

### CROSS-REFERENCE TO RELATED APPLICATION

This Application claims priority from Chinese Application CN202320509835.4, filed March 14, 2023 in China.

### BACKGROUND

### 1. Field

Example embodiments relate to pipe connection fittings, and in particular to a pipe connection assembly and an inflatable product.

### 2. Description of Related Art

There is an increasing desire for various portable apparatuses for use in a variety of places. For example, an apparatus used indoors may be moved to the outdoor for use. As a typical example, inflatable products are lightweight and easy to package and store, and are widely used. An inflatable product may be provided with a hose for fluid delivery. For example, in an inflatable SPA pool, water or air is delivered to a hose of the inflatable SPA pool by means of a pump system, and is then sprayed into the water in the pool to achieve a massage effect. During the transportation, use, or folding of the inflatable product, when the hose is accidentally pulled, the hose may be easily pulled off of a joint. Such a hose may be clamped between a rigid rubber-coated joint and a nut so as to achieve a fixed connection between the hose and the joint, which is complex in structure and high in cost.

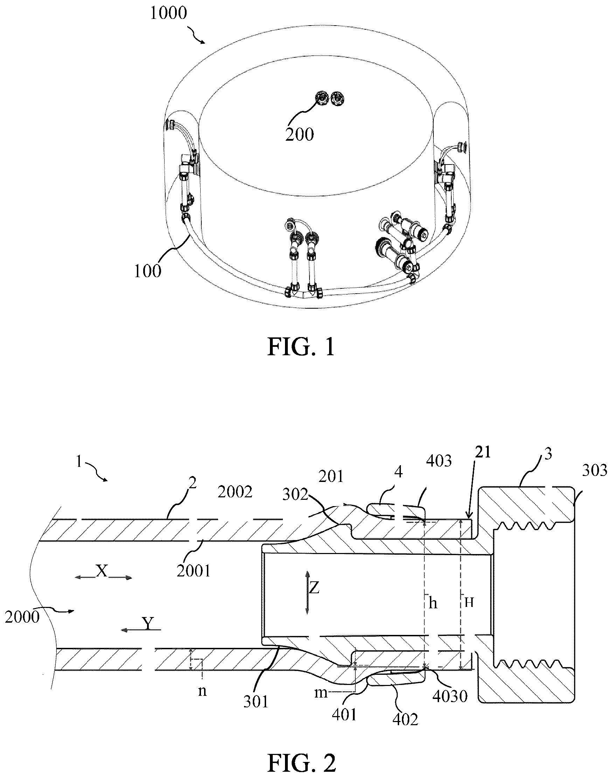

Referring to FIG. 1, taking a SPA pool 1000 as an example, water is delivered into a hose 100 by means of a water pump (not shown), and is then sprayed from nozzles 200 on an inner wall of the pool 1000 so as to achieve a massage effect. During this process, the hose 100 is connected to a joint to deliver water to the SPA pool 1000. However, after the hose 100 is connected to the joint, the problems such as loose connection or even detachment may easily occur during long-term use.

### SUMMARY

Example embodiments may address at least the above problems and/or disadvantages and other disadvantages not described above. Also, example embodiments are not required to overcome the disadvantages described above, and may not overcome any of the problems described above.

According to an aspect of an example embodiment, a pipe connection assembly, comprises: a first pipe comprising a first end and a second end; a second pipe comprising an insertion end, extending in a lengthwise direction of the second pipe, and a first protrusion protruding radially outward from the insertion end, wherein the insertion end is inserted into the second end of the first pipe such that the first protrusion presses radially outward on the first pipe thereby creating a second protrusion protruding radially outward from a pipe wall of the first pipe; and a fixing member sleeved around an outer periphery of the first pipe and disposed in the lengthwise direction between the second protrusion and the second end of the first pipe.

The fixing member may comprise: a first end abutting against the second protrusion; a second end; and a plurality of circumferentially-spaced claws, each of the claws protruding from the second end and configured to engage with an outer periphery of the first pipe.

The fixing member may comprise: a first fixing component; and a second fixing component detachably connected to the first fixing component; wherein the first fixing component, the second fixing component, and the first protrusion together define a holding space, wherein the second protrusion is disposed in the holding space.

The first fixing component may comprise a first threaded connector comprising an internal thread; the second fixing component may comprise a second threaded connector comprising an external thread; and the first threaded connector and the second threaded connector may be connected to each other by means the internal thread and the external thread.

An inner wall of the first fixing component may comprise a first stop portion; an inner wall of the second fixing component may comprise a second stop portion; and the holding space may be defined by the first stop portion, the second stop portion, and the first protrusion together.

The first stop portion may comprise a first slope portion facing the second protrusion; the second stop portion may comprise a second slope portion facing the second protrusion; and the holding space may be defined by the first slope portion, the second slope portion, and the first protrusion together.

The inner wall of the first fixing component may comprise a pressing end, the first stop portion may be disposed between the pressing end and the second stop portion, and the pressing end may be pressed against the outer periphery of the first pipe.

The fixing member may comprise a hoop member that is sleeved around the outer periphery of the first pipe.

The pipe connection may further comprise a protective sleeve wrapped around an outer periphery of the hoop member.

According to an aspect of another example embodiment, an inflatable product may comprise a pipe connection assembly as described above.

### BRIEF DESCRIPTION OF THE DRAWINGS

The above and/or other aspects will become apparent and more readily appreciated from the following description of example embodiments, taken in conjunction with the accompanying drawings, in which:
FIG. 1 is a perspective view of a pool according to an example embodiment;
FIG. 2 is a cross-sectional view of a pipe connection assembly according to a first example embodiment, with a fixing member in the pipe connection assembly comprising claws;
FIG. 3 is an exploded view of the pipe connection assembly according to the first example embodiment, with the fixing member in the pipe connection assembly comprising claws;
FIG. 4 is a first schematic structural diagram of a second pipe in the pipe connection assembly according to the first example embodiment, with a second end of a second pipe having an internal thread;
FIG. 5 is a second schematic structural diagram of the second pipe in the pipe connection assembly according to the first example embodiment, with the second end of the second pipe having no internal thread;
FIG. 6 is a perspective view of the pipe connection assembly according to the first example embodiment, with the fixing member in the pipe connection assembly comprising claws;
FIG. 7 is an exploded view of a pipe connection assembly according to a second example embodiment, with a fixing member in the pipe connection assembly comprising two threaded connectors;
FIG. 8 is a cross-sectional view of the pipe connection assembly according to the second example embodiment, with the fixing member in the pipe connection assembly comprising two threaded connectors;
FIG. 9 is a perspective view of the pipe connection assembly according to the second example embodiment, with the fixing member in the pipe connection assembly comprising two threaded connectors;
FIG. 10 is an exploded view of a pipe connection assembly according to a third example embodiment, with a fixing member in the pipe connection assembly comprising two threaded connectors, one of which comprises two separated-type components;
FIG. 11 is a cross-sectional view of the pipe connection assembly according to the third example embodiment, with the fixing member in the pipe connection assembly comprising two threaded connectors, one of which comprises two separated-type components;
FIG. 12 is an exploded view of a pipe connection assembly according to a fourth example embodiment, with a fixing member in the pipe connection assembly comprising a hoop;
FIG. 13 is a cross-sectional view of the pipe connection assembly according to the fourth example embodiment, with the fixing member in the pipe connection assembly comprising a hoop;
FIG. 14 is a perspective view of the pipe connection assembly according to the fourth example embodiment, with the fixing member in the pipe connection assembly comprising a hoop;
FIG. 15 is a perspective view of the pipe connection assembly according to the fourth example embodiment comprising a protective sleeve, with the fixing member in the pipe connection assembly comprising a hoop;
FIG. 16 is an exploded view of a pipe connection assembly according to a fifth example embodiment, with a fixing member in the pipe connection assembly comprising a steel wire hoop;
FIG. 17 is a cross-sectional view of the pipe connection assembly according to the fifth example embodiment, with the fixing member in the pipe connection assembly comprising a steel wire hoop;
FIG. 18 is a perspective view of the pipe connection assembly according to the fifth example embodiment, with the fixing member in the pipe connection assembly comprising a steel wire hoop; and
FIG. 19 is a perspective view of the pipe connection assembly according to the fifth example embodiment comprising a protective sleeve, with the fixing member in the pipe connection assembly comprising a steel wire hoop.

### DETAILED DESCRIPTION

Reference will now be made in detail to example embodiments which are illustrated in the accompanying drawings, wherein like reference numerals refer to like elements throughout. In this regard, the example embodiments may have different forms and may not be construed as being limited to the descriptions set forth herein.

It will be understood that the terms "include," "including", "comprise, and/or "comprising," when used in this specification, specify the presence of stated features, integers, steps, operations, elements, and/or components, but do not preclude the presence or addition of one or more other features, integers, steps, operations, elements, components, and/or groups thereof.

It will be further understood that, although the terms "first," "second," "third," etc., may be used herein to describe various elements, components, regions, layers and/or sections, these elements, components, regions, layers and/or sections may not be limited by these terms. These terms are only used to distinguish one element, component, region, layer or section from another element, component, region, layer or section.

As used herein, the term "and/or" includes any and all combinations of one or more of the associated listed items. Expressions such as "at least one of," when preceding a list of elements, modify the entire list of elements and do not modify the individual elements of the list.

Various terms are used to refer to particular system components. Different companies may refer to a component by different names - this document does not intend to distinguish between components that differ in name but not function.

Matters of these example embodiments that are obvious to those of ordinary skill in the technical field to which these example embodiments pertain may not be described here in detail.

It should be noted that the orientation or position relationships indicated by the terms such as "upper", "lower", "inner" and "bottom" are based on the orientation or position relationships shown in the drawings or the orientation or position relationships in which a product is customarily placed during use, and are only intended to facilitate description.

It should also be noted that the terms "arranged," "connected," and "connection" should be understood in a broad sense, unless otherwise explicitly specified and limited. For example, a connection may be a fixed connection, a detachable connection, or an integral connection; or may be a mechanical connection or an electrical connection; or may be a direct connection, or an indirect connection by means of an intermediate medium, or communication between interiors of two elements.

According to an example embodiment, a pipe connection assembly is provided, which is composed of a joint, a hose fixing member, and a hose.

One or more example pipe connection assemblies described herein may be applied to, but should not be limited to, SPA pools, inflatable floating mats, inflatable beds/mattresses, and other inflatable products that use pipes for delivery of fluid such as water or air.

Example embodiments described herein take the application of a pipe connection assembly to a SPA pool as an example.

### First example embodiment

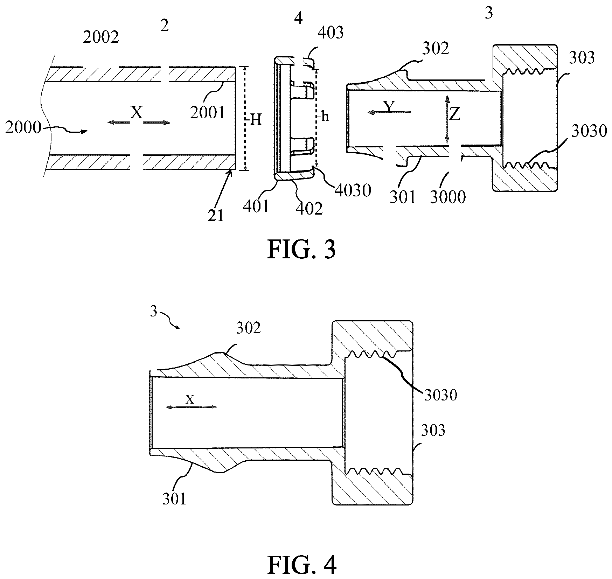

Referring to FIGs. 2 and 3, a pipe connection assembly 1 according to an example embodiment comprises: a first pipe 2, a second pipe 3 (which may be, for example, a joint that comprises a portion extending into an inner cavity of the first pipe 2), and a fixing member 4. A part of the second pipe 3 is inserted into the first pipe 2. Taking an example in which the second pipe 3 is a joint, the first pipe 2 may be made of a soft material (e.g. silicone or polyvinyl chloride (PVC)); and the second pipe 3 may be made of a material which is harder than that of the first pipe 2. Alternately, at least a portion of the second pipe 3 which is inserted to the inner cavity 2000 of the first pipe 2 may be made of a material harder than that of the first pipe 2, so that the second pipe 3 can press the first pipe 2 to cause a certain amount of deformation of the first pipe 2, with a shape of the part the second pipe 3 in contact with the first pipe 2 remaining substantially unchanged. A first end (i.e., an insertion end 301) of the second pipe 3 in a lengthwise direction (shown as an X-direction in FIG. 2, which also indicates an axial longitudinal direction with reference to the longitudinal extension of each cylindrical pipe) is configured to be inserted into the inner cavity 2000 of the first pipe 2, and a second end 303 is configured to be connected to other parts of a pipeline. The first pipe 2 also comprises a first end (not shown) and a second end 21, through which the first end (insertion end) 301 of the second pipe 2 is inserted to connect the two pipes 2 and 3 each other.

According to an example embodiment, the insertion end 301 of the second pipe 3 is cylindrical and comprises a first protrusion 302 which extends radially outwards with respect to an external diameter of a central part of the second pipe 3, placed between the first end 301 and the second end 303. As shown in figure 2, the second pipe 3 presents a tapered shape extending from the first protrusion 302 towards the first end 301, creating a sort of partial arrowhead profile. The insertion end 301 is inserted into the inner cavity 2000 of the first pipe 2 (with the insertion direction of the second pipe 3 relative to the first pipe 2 being a Y-direction as shown in FIGs. 2 and 3; the Y-direction indicates the verse along which the insertion end 301 of the second pipe 3 is inserted into the first pipe 2). A cavity wall 2001 of the inner cavity 2000 of the first pipe 2 fits around an outer wall 3000 of the insertion end 301 of the second pipe 3. During insertion, the first protrusion 302 presses outward on the cavity wall 2001 of the inner cavity 2000 of the first pipe 2. Since the first protrusion 302 protrudes outwards in a radial direction (shown as a Z-direction in FIGs. 2 and 3, which therefore indicates a radial direction, orthogonal to the X-direction), the first protrusion 302 presses the cavity wall 2001 of the inner cavity 2000 of the first pipe 2 outwards in the radial direction to push up the cavity wall 2001 of the inner cavity 2000 of the first pipe 2 in the radial direction so as to form a second protrusion 201 in the pipe wall (including an outer wall 2002) of the first pipe 2, as shown in FIG. 2.

Referring to FIGs. 2 and 3, the fixing member 4 is sleeved on the outer periphery of the first pipe 2 and located between the second end 303 of the second pipe 3 and the second protrusion 201. The second protrusion 201 is thereby held between the fixing member 4 and the first protrusion 302 to provide a seal at the connection of the first pipe 2 and the second pipe 3, to aid in the prevention of leakage of liquid.

In addition, referring to FIG. 2, the second protrusion 201 limits the position of the fixing member 4 in the lengthwise direction (shown as the X-direction in FIG. 2) to prevent the fixing member 4 from sliding out of the first pipe 2 in the lengthwise direction, and the fixing member 4 itself presses the outer wall 2002 of the first pipe 2 in the radial direction (shown as the Z-direction in FIG. 2) to allow close fit between the cavity wall 2001 of the inner cavity 2000 of the first pipe 2 and the outer wall 3000 of the insertion end 301 of the second pipe 3, thus providing a sealed connection between the first pipe 2 and the second pipe 3, to prevent the first pipe 2 from being detached from the second pipe 3. This connection may be convenient and may provide a good sealing connection as compared with a connection using a rigid rubber-coated joint and a nut. This connection may also reduce a cost of the connection. In other words, the fixing member 4 is sleeved around an outer periphery of the first pipe 2, in particular around the outer wall 2002 of the first pipe 2, and is disposed in the lengthwise direction between the second protrusion 201 of the first pipe 2 and the second end 303 of the second pipe 3, pressing the outer wall 2002 of the first pipe inwards in radial direction, against the outer wall 3000 of the second pipe 3, creating a mechanical interference between the first protrusion 302 and the second protrusion 201, thus avoiding the disengagement of the first pipe 2 from the second pipe 3.

Optionally, referring to FIG. 3, the first protrusion 302 may entirely surround the insertion end 301 of the second pipe 3, in a circumferential direction. A slope of a side of the first protrusion 302 facing away from the second end 303 of the second pipe 3 may be longer and shallower than a slope of the side of the first protrusion 302 facing the second end 303 of the second pipe 3. Alternately, according to one or more example embodiments, the first protrusion 302 may be discontinuously distributed around the insertion end 301 in a circumferential direction thereof. Furthermore, alternately, as shown in FIG. 4, the slope of the side of the first protrusion 302 close to the second end 303 of the second pipe 3 may be approximately the same as that of the side thereof away from the second end of the second pipe. As shown in FIG. 2, the second pipe 3 which has another cross-sectional shape and can form the second protrusion 201 on the pipe wall of the first pipe 2 may also be configured as the pipe connection assembly.

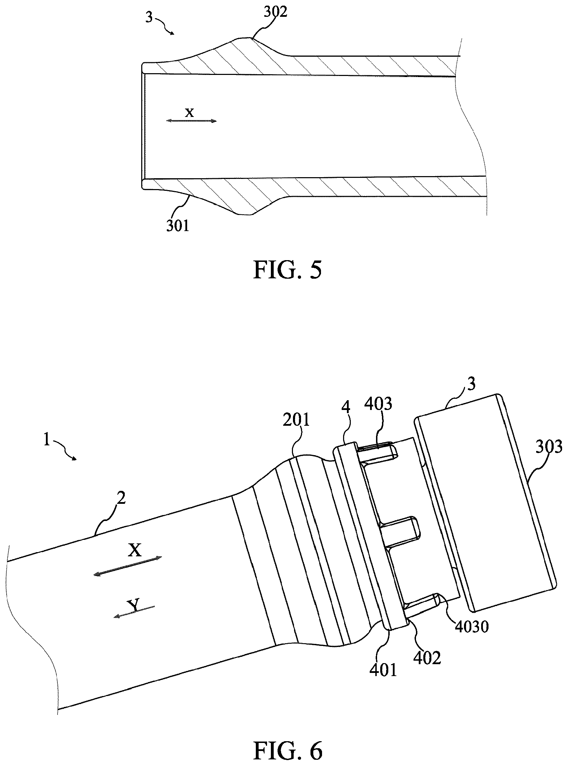

With reference to FIG. 4, an inner wall of the second end 303 of the second pipe 3 may comprise an internal thread 3030. According to one or more example embodiments, referring to FIG. 5, and in conjunction with FIG. 4, the structure of the second end 303 may be configured to correspond to a structure of a pipeline to which the second end 303 of the second pipe 3 is to be connected. For example, the second pipe 3 may alternately have no internal thread 3030.

Referring to FIGs. 2 and 3, in this example embodiment, the fixing member 4 comprises a first end 401 and a second end 402. The first end 401 may take the shape of a closed ring and may abut against the second protrusion 201. The second end 402 may comprise a plurality of circumferentially-spaced claws 403, and each claw 403 may extend away from the second protrusion 201 and engage with the outer wall 2002 of the first pipe 2 in a clamping manner. The first end 401 of the fixing member 4 may be located between the second protrusion 201 and the second end 402 of the fixing member 4.

The claws 403 may extend from the second end 402 in the lengthwise direction and extend towards the second end 303 of the second pipe 3. An end portion, close to the second end 303 of each claw 403 may be curved inwards in the radial direction to form a limiting portion 4030, at the end portion 403, with a substantially acute angle in cross-section. An inner diameter h between opposing ones of the plurality of limiting portions 4030, may be less than the outer diameter H of the first pipe 2, so that the limiting portions 4030 of the claws 403 can be clamped to the outer wall 2002 of the first pipe 2 in the radial direction, aid in fixing the position of the fixing member 4 relative to the first pipe 2.

As an example, referring to FIG. 2, a distance m, in the radial direction (shown as the Z-direction in FIG. 2), between the plurality of limiting portions 4030 and the first protrusion 302 is less than the thickness n of the pipe wall of the first pipe 2. Such an arrangement enables the limiting portions 4030 of the claws 403 to be clamped to the outer wall 2002 of the first pipe 2 to restrain the first pipe 2 from sliding relative to the fixing member 4 and thus being detached from the second pipe 3. The second protrusion 201 is formed on the pipe wall of the first pipe 2, and the second protrusion 201 is held by the fixing member 4 and the first protrusion 302 together to allow the first pipe 2 to be sealed to the second pipe 3.

For assembly of the above-described pipe connection assembly, the fixing member 4 is sleeved on the outer side of the second pipe 3, and the first pipe 2 is inserted between the second pipe 3 and the fixing member 4. The fixing member 4 may be moved on an outside surface of the first pipe 2 to allow the first pipe 2 to be held between the fixing member 4 and the second pipe 3 and allow the limiting portions 4030 to come into contact with the first pipe 2.

Referring to FIGs. 2 and 6, if the first pipe 2 is accidentally pulled and thus begins sliding in the insertion direction (shown as the Y-direction in FIG. 6, considering as "insertion direction" the direction along which the first end 301 of the second pipe 3 is inserted into the first pipe 2) of the insertion end 301, the fixing member 4 also slides with the first pipe 2 until the fixing member 4 slides to the second protrusion 201, and the first end 401 of the fixing member 4 abuts against the second protrusion 201. That is, the sliding of the fixing member 4 and the first pipe 2 in the lengthwise direction is limited, so as to ensure the sealing connection between the first pipe 2 and the second pipe 3.

### Second example embodiment

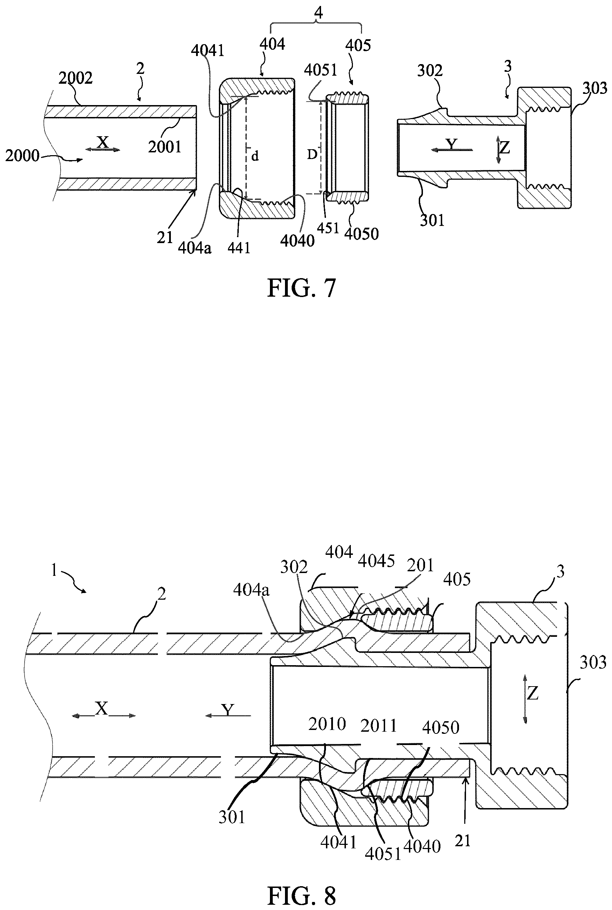

A pipe connection assembly according to this example embodiment is substantially the same as that of the first example embodiment. The difference from the first example embodiment lies in that the specific structure of the fixing member in this example embodiment is different from the structure of the fixing member in the first example embodiment. Referring to FIG. 3, in the first example embodiment, the fixing member 4 has a hollow cylindrical structure comprising claws 403. Referring to FIG. 7, in this example embodiment, the fixing member 4 comprises two fixing components (404 and 405) which cooperate with each other.

For example, referring to FIGs. 7 to 9, in this example embodiment, the fixing member 4 comprises a first threaded connector (i.e., a first fixing component) 404 and a second threaded connector (i.e., a second fixing component) 405. The first threaded connector 404 is detachably connected to the second threaded connector 405, and the first threaded connector 404, the second threaded connector 405 and the first protrusion 302 together define a holding space 4045. The second protrusion 201 is disposed in the holding space 4045. That is to say, the second protrusion 201 is held by the first threaded connector 404, the second threaded connector 405 and the first protrusion 302, together, such that the first threaded connector 404 and the second threaded connector 405 are fixed relative to the second protrusion 201, so as to press the first pipe 2 and the second pipe 3 in the radial direction to achieve a sealing connection between the first pipe 2 and the second pipe 3.

Referring to FIGs. 7 to 9, the first threaded connector 404 and the second threaded connector 405 are connected to each other by means of an internal thread 4040 of the first threaded connector 404 engaging with an external thread 4050 of the second threaded connector 405. As an example, the two ends of the second protrusion 201 in the lengthwise direction (shown as the X-direction in FIG. 8) are respectively an upper slope 2010 and a lower slope 2011.

Referring to FIGs. 7 and 8, an inner wall of the first threaded connector 404 comprises a first stop portion 4041, and an inner wall of the second threaded connector 405 is provided with a second stop portion 4051. The first stop portion 4041, the second stop portion 4051 and the first protrusion 302 together define the holding space 4045.

As an example, referring to FIGs. 7 and 8, the second threaded connector 405 is sleeved on an outer wall 2002 of the first pipe 2, the first threaded connector 404 is sleeved on the second threaded connector 405, and the internal thread 4040 of the first threaded connector 404 is engaged with the external thread 4050 of the second threaded connector 405, so that the first pipe 2 and the second pipe 3 are tightly pressed to achieve the sealing connection between the first pipe 2 and the second pipe 3 and aid in preventing the first pipe 2 from being detached from the second pipe 3.

Referring to FIGs. 7 and 8, both the first stop portion 4041 and the second stop portion 4051 are sloped towards the second protrusion 201, therefore the first stop portion 4041 comprises a first slope portion 441 and the second stop portion 4051 comprises a second slope portion 451; the first stop portion 4041, the second stop portion 4051 and the first protrusion 302 together define the holding space 4045. That is, the first stop portion 4041 faces the upper slope 2010 of the second protrusion 201, and the second stop portion 4051 faces the lower slope 2011 of the second protrusion 201, so as to allow the first stop portion 4041 to abut against the upper slope 2010 of the second protrusion 201 and allow the second stop portion 4051 to abut against the lower slope 2011 of the second protrusion 201, so that the second protrusion 201 is limited in the holding space 4045 to achieve the fixed connection between the first pipe 2 and the second pipe 3. In other words, the first slope portion 441 of the first stop portion 4041 faces the second protrusion 201 and the second slope portion 451 of the second stop portion 4051 faces the second protrusion 201, so that the first slope 441 of the first stop portion 441 matches the upper slope 2010 of the second protrusion 201 and the second slope portion 451 of the second stop portion 4051 matches the lower slope 2011 of the second protrusion 201.

As an example, referring to FIGs. 7 and 8, in the insertion direction of the insertion end 301 (shown as the Y-direction in FIG. 7), the inner diameter d of the first stop portion 4041 gradually decreases, and the inner diameter D of the second stop portion 4051 gradually increases. That is, in the insertion direction of the insertion end 301 (indicated by the Y-direction), the inner diameter d of the first threaded connector 404 at the first stop portion 4041 gradually decreases, and, in contrast, the inner diameter D of the second threaded connector 405 at the second stop portion 4051 gradually increases, which respectively adapt to the upper slope 2010 and the lower slope 2011 of the second protrusion 201, so that the first stop portion 4041 abuts against the upper slope 2010 of the second protrusion 201, and the second stop portion 4051 abuts against the lower slope 2011 (see FIG. 8). In this way, the fixed connection between the first pipe 2 and the second pipe 3 by the fixing member 4 is achieved.

Referring to FIG. 8, an inner wall of the first threaded connector 404 comprises a pressing end 404a, the first stop portion 4041 is disposed between the pressing end 404a and the second stop portion 4051, and the pressing end 404a is pressed against the outer wall 2002 of the first pipe 2. As an example, the pressing end 404a is the end portion, away from the second end 303 of the second pipe 3, of the first threaded connector 404. Referring to FIGs. 7 and 8, the pressing end 404a of the first threaded connector 404 applies a force on the outer wall 2002 of the first pipe 2 in the radial direction, so as to press the first pipe 2, so that the cavity wall 2001 of the inner cavity 2000 of the first pipe 2 fits with the insertion end 301 of the second pipe 3 more closely to effectively prevent the problems, such as the first pipe 2 bulging, caused by water entering the part where the first pipe 2 is connected to the second pipe 3.

### Third example embodiment

This example embodiment is a variation based on the second example embodiment, and is different from the second example embodiment in that the second threaded connector has a different structure in this example embodiment. In the second example embodiment, the second threaded connector is integrally formed, and has an integrally formed annular cross-section. However, in this third example embodiment, the second threaded connector is formed by two separated-type components (405a and 405b) assembled together.

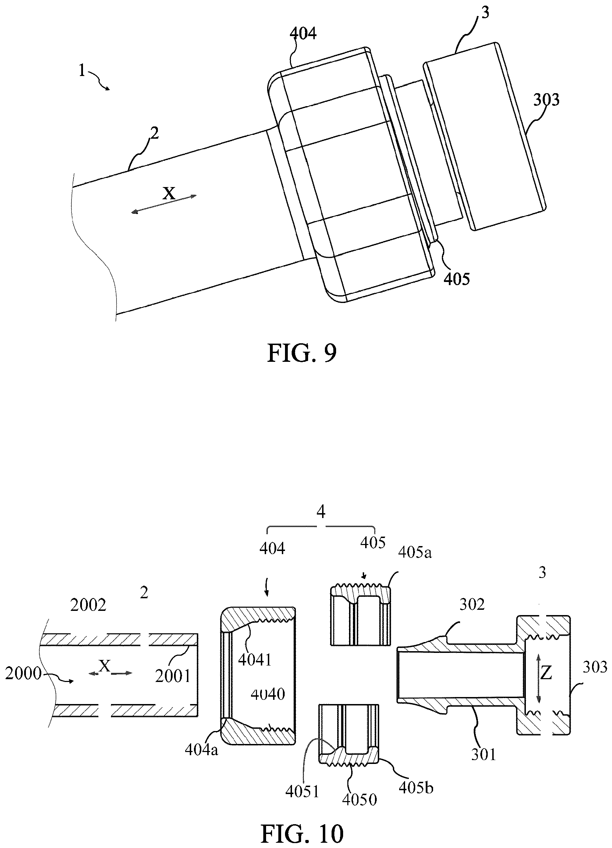

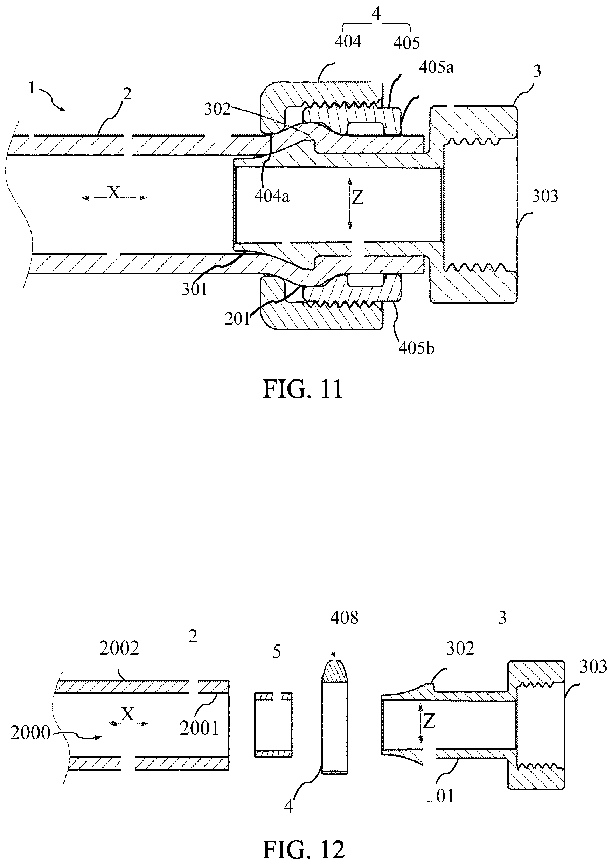

Specifically, referring to FIGs. 10 and 11, the second threaded connector 405 is formed by a first portion 405a and a second portion 405b which are assembled together in the Z-direction shown in FIG. 10. That is, the second threaded connector 405 may have an integrally formed annular cross-section (as in the second example embodiment), or may be alternatively formed by the first portion 405a and the second portion 405b, having a semi-annular cross-section, as shown in FIG. 10 assembled together, and the positions of parts of the second threaded connector 405 are limited by the first threaded connector 404. It should be understood that, in other example embodiments, the second threaded connector 405 may be formed by more (e.g., three) portions assembled together.

### Fourth example embodiment

Compared with the first example embodiment, the second example embodiment and the third example embodiment, the fixing member of the pipe connection assembly in this example embodiment has different specific structure, while the first pipe and the second pipe have the same or substantially the same structure.

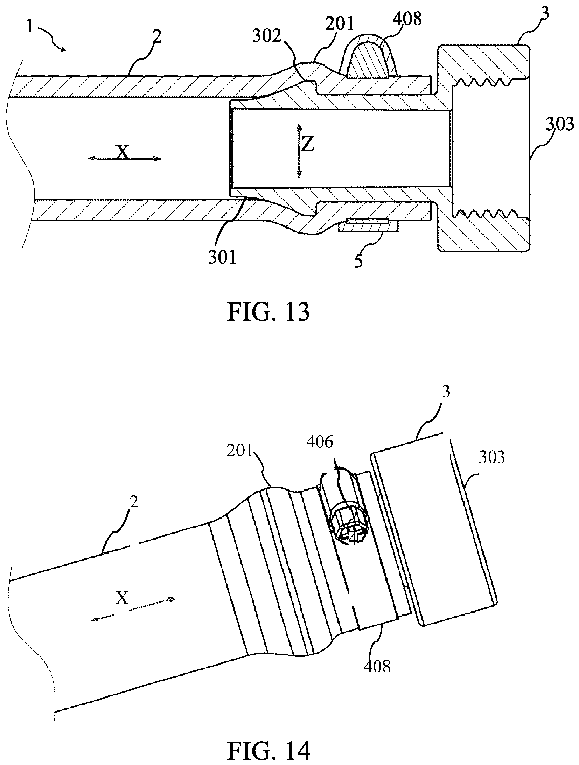

Specifically, referring to FIGs. 12 to 15, the fixing member 4 in this example embodiment comprises a hoop member 408, or simply a hoop 408. The hoop 408 is sleeved on an outer wall 2002 of the first pipe 2, and the first pipe 2 and the insertion end 301 are fixedly connected by means of the hoop 408 in the radial direction (shown as the Z-direction in FIG. 13). As an example, the hoop 408 is sleeved on the outer wall 2002 of the first pipe 2 and tightly presses the first pipe 2 and the second pipe 3 in the radial direction, so as to effectively prevent the first pipe 2 from being detached from the second pipe 3.

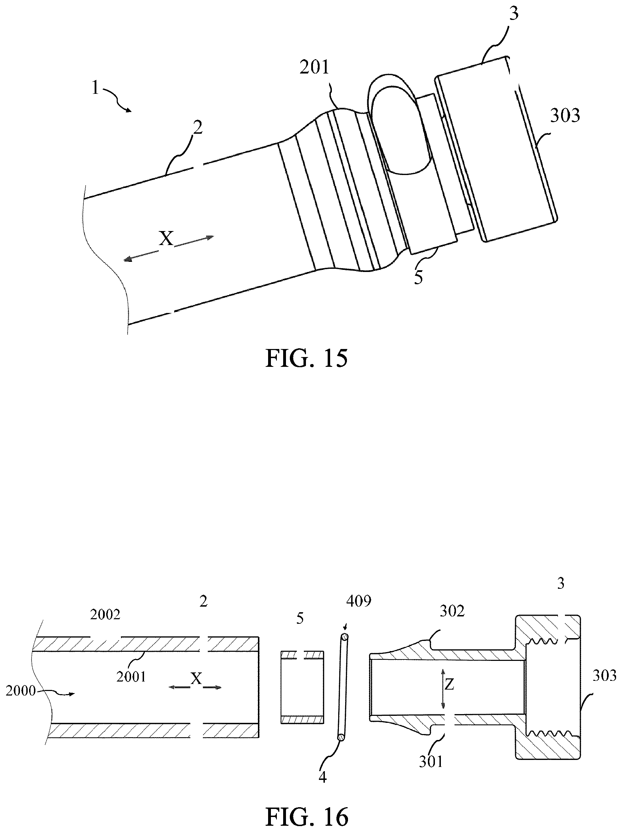

Referring to FIGs. 12 to 14, in a case in which the hoop 408 is used as the fixing member 4, there is a protrusion 406 after the hoop 408 is mounted. For a product including such a pipe connection assembly, the protrusion 406 may damage (e.g., scratch) other parts of the product. For example, when the pipe connection assembly 1 is used in an inflatable chamber of an inflatable product (e.g., an inflatable pool) or used to connect different air chambers of an inflatable product, there is a risk of the protrusion 406 scratching the wall of the inflatable chamber of the inflatable product because the inflatable product is folded during transportation or storage. In view of this, the pipe connection assembly further comprises a protective sleeve 5. The protective sleeve 5 is wrapped around the periphery of the hoop 408 to wrap the protrusion 406 (as shown in FIG. 15), so as to effectively prevent the protrusion 406 from scratching the wall of the inflatable chamber of the inflatable product.

### Fifth example embodiment

Compared with the first example embodiment, the second example embodiment, the third example embodiment and the fourth example embodiment described above, the fixing member of the pipe connection assembly in this example embodiment has a different structure, while the first pipe and the second pipe have the same structure.

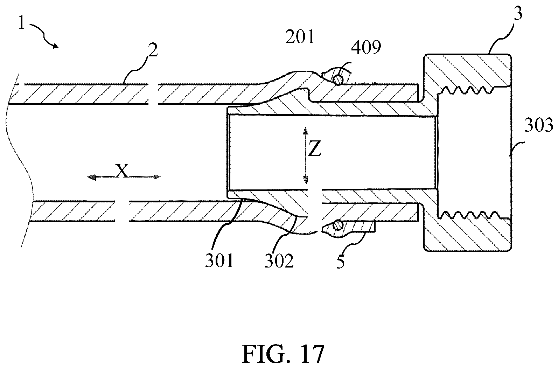

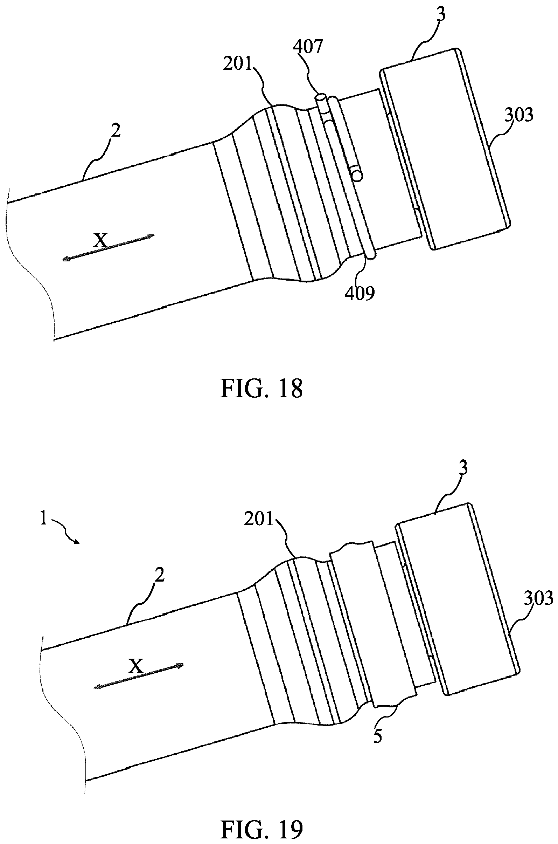

Specifically, referring to FIGs. 16 to 19, the fixing member 4 comprises a hoop member 409, in particular a steel wire hoop 409. The steel wire hoop 409 is sleeved on the outer wall 2002 of the first pipe 2, and the first pipe 2 is fixedly connected to the insertion end 301 in a radial direction (shown as the Z-direction in FIG. 17) by means of the steel wire hoop 409. As an example, the steel wire hoop 409 is sleeved on an outer wall 2002 of the first pipe 2, and the first pipe 2 and the second pipe 3 are tightly pressed by the steel wire hoop 409 in the radial direction, so as to effectively prevent the first pipe 2 from being detached from the second pipe 3.

Optionally, referring to FIGs. 16 and 17, the pipe connection assembly further comprises a protective sleeve 5. The protective sleeve 5 is wrapped around the periphery of the steel wire hoop 409. Therefore, the protective sleeve 5 is made of elastic or flexible material, to allow its deformation to be enlarged and wrapped around the steel wire hoop 409. Similar to the example embodiments shown in FIGs. 12 to 14, after the steel wire hoop 409 is mounted, the protective sleeve 5 is wrapped around the periphery of the steel wire hoop 409, so as to effectively prevent a protrusion 407 from scratching a wall of an inflatable chamber of an inflatable product.

All of the above-described embodiments have the common features of having the first end 301 presenting a first protrusion 302 of the second pipe 3 inserted into the second end 21 of the first pipe 2, thus creating a second protrusion 201 on the first pipe 2. Then the fixing member 4 is sleeved around an outer periphery of the first pipe 2, in particular around the outer wall 2002 of the first pipe 2, and is disposed in the lengthwise direction between the second protrusion 201 of the first pipe 2 and the second end 303 of the second pipe 3 (or between the second protrusion 201 of the first pipe 2 and the first end 21 of the first pipe 2), pressing the outer wall 2002 of the first pipe inwards in radial direction, against the outer wall 3000 of the second pipe 3, creating a mechanical interference between the two pipes, in particular between the first protrusion 302 and the second protrusion 201, thus avoiding the disengagement of the first pipe 2 from the second pipe 3, both in a rest position and if pulling the first pipe 2 away from the second pipe 3 along the Y-direction.

The pipe connection assemblies described above may be used for an inflatable product, such as an inflatable pool (e.g., an inflatable SPA pool). The pipe connection assemblies may be used as a part of a pipeline that is used for delivering water or air into a pool or for discharging water or air from the pool.

It may be understood that the example embodiments described herein may be considered in a descriptive sense only and not for purposes of limitation. Descriptions of features or aspects within each example embodiment may be considered as available for other similar features or aspects in other example embodiments.

While example embodiments have been described with reference to the figures, it will be understood by those of ordinary skill in the art that various changes in form and details may be made therein without departing from the scope as defined by the following claims.

## Claims

1. A pipe connection assembly (1), comprising:
a first pipe (2) comprising a first end and a second end (21);
a second pipe (3) comprising a first end (301), called also insertion end (301), extending in a lengthwise direction of the second pipe (3), a first protrusion (302) protruding radially outward from the insertion end (301), and a second end (303),
wherein the insertion end (301) is inserted into the second end (21) of the first pipe (2) such that the first protrusion (302) presses radially outward on the first pipe (2) thereby creating a second protrusion (201) protruding radially outward from a pipe wall of the first pipe (2); and
a fixing member (4) sleeved around an outer wall (2002) of the first pipe (2) and disposed in the lengthwise direction between the second protrusion (201) of the first pipe (2) and the second end (303) of the second pipe (3), creating a mechanical interference with the first protrusion (302) and the second protrusion (201) thus avoiding the disengagement of the first pipe (2) from the second pipe (3).

2. The pipe connection assembly according to claim 1, wherein the fixing member (4) comprises:
a first end (401) abutting against the second protrusion (201);
a second end (402); and
a plurality of circumferentially-spaced claws (403), each of the claws (403) protruding from the second end (402) and configured to engage with the outer wall (2002) of the first pipe (2).

3. The pipe connection assembly according to claim 1, wherein the fixing member (4) comprises:
a first fixing component (404); and
a second fixing component (405) detachably connected to the first fixing component (404);
wherein the first fixing component (404), the second fixing component (405), and the first protrusion (302) together define a holding space (4045), wherein the second protrusion (201) is disposed in the holding space (4045).

4. The pipe connection assembly according to claim 3, wherein:
the first fixing component (404) comprises a first threaded connector (404) comprising an internal thread (4040);
the second fixing component (405) comprises a second threaded connector (405) comprising an external thread (4050);
wherein the first threaded connector (404) and the second threaded connector (405) are connected to each other by means the internal thread (4040) and the external thread (4050).

5. The pipe connection assembly according to claim 3, wherein:
an inner wall of the first fixing component (404) comprises a first stop portion (4041);
an inner wall of the second fixing component (405) comprises a second stop portion (4051); and
the holding space (4045) is defined by the first stop portion (4041), the second stop portion (4051), and the first protrusion (302) together.

6. The pipe connection assembly according to claim 5, wherein:
the first stop portion (4041) comprises a first slope portion (441) facing the second protrusion (201);
the second stop portion (4051) comprises a second slope portion (451) facing the second protrusion (201); and
the holding space (4045) is defined by the first slope portion (441), the second slope portion (451), and the first protrusion (302) together.

7. The pipe connection assembly according to claim 5, wherein the inner wall of the first fixing component (404) comprises a pressing end (404a), the first stop portion (4041) is disposed between the pressing end (404a) and the second stop portion (4051), and the pressing end (404a) is pressed against the outer wall (2002) of the first pipe (2).

8. The pipe connection assembly according to claim 4, wherein:
the second fixing component (405) comprises at least a first portion (405a) and a second portion (405b) which are assembled together along a radial direction.

9. The pipe connection assembly according to claim 1, wherein the fixing member (4) comprises a hoop member (408, 409) that is sleeved around the outer wall (2002) of the first pipe (2), thus fixedly connecting together, in the radial direction, the first pipe (2) and the insertion end (301) of the second pipe (3).

10. The pipe connection assembly according to claim 9, wherein the hoop member is a steel wire hoop (409).

11. The pipe connection assembly according to claim 9 or 10, further comprising a protective sleeve (5) wrapped around an outer periphery of the hoop member (408, 409).

12. An inflatable product, comprising the pipe connection assembly of any one of claims 1 to 11.
